(19) Europäisches Patentamt
European Patent Office
Office européen des brevets

(11) **EP 3 135 835 A1**

(12) **EUROPEAN PATENT APPLICATION**

(43) Date of publication:
**01.03.2017 Bulletin 2017/09**

(51) Int Cl.:
***E04B 1/48*** *(2006.01)*       *E04C 2/04* *(2006.01)*
*F16B 13/00* *(2006.01)*

(21) Application number: **16177024.3**

(22) Date of filing: **29.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.06.2015 PT 15108622**

(71) Applicant: **ETMA - Empresa Tecnica de Metalurgia S.A.**
**4711-909 Braga (PT)**

(72) Inventors:
• **RENDEIRO CORREIA DE SOUSA, JOÃO PEDRO**
**4785-270 TROFA (PT)**

• **PINTO DE QUEIRÓS, LUÍS MIGUEL**
**4705-651 VILAÇA (PT)**
• **JÚLIO, EDUARDO**
**3040-392 COIMBRA (PT)**
• **COSTA NEVES, LUIS**
**3000-377 COIMBRA (PT)**
• **RAPOSO, JOSÉ MARIA**
**3000-076 COIMBRA (PT)**
• **MARTINS, JOÃO PAULO**
**4710-234 BRAGA (PT)**
• **SANTOS DUARTE, GONÇALO**
**2350-482 TORRES NOVAS (PT)**

(74) Representative: **Patentree, Lda.**
**Edificio Net**
**Rua de Salazares, 842**
**4149-002 Porto (PT)**

(54) **ANCHORING CONNECTOR AND METHODS FOR MANUFACTURING THEREOF**

(57)     The present disclosure concerns an anchoring connector for interconnecting two solid bodies, namely concrete layers from different concreting.

The connector disclosed herein comprises a tubular body with a front part for inserting into the first solid body and a rear part for attaching the second solid body to the first solid body, and a plurality of anchoring elements for anchoring the connector to the two solid bodies, wherein the anchoring elements are distributed along the entire tubular body of the connector, wherein the anchoring elements distributed on the front part of the tubular body have an anchoring contrary to the front-rear movement of the connector and, the anchoring elements distributed on the rear part of the tubular body have an anchoring contrary to the rear-front movement of the connector.

**Fig. 2**

EP 3 135 835 A1

Printed by Jouve, 75001 PARIS (FR)

**Description**

**Technical Field**

The technical field of this disclosure concerns a device used to interconnect two solid bodies, namely concrete layers created by separate pourings. The solution particularly consists of an anchoring connector used to interconnect concrete layers with a concrete-to-concrete coupling.

**Background**

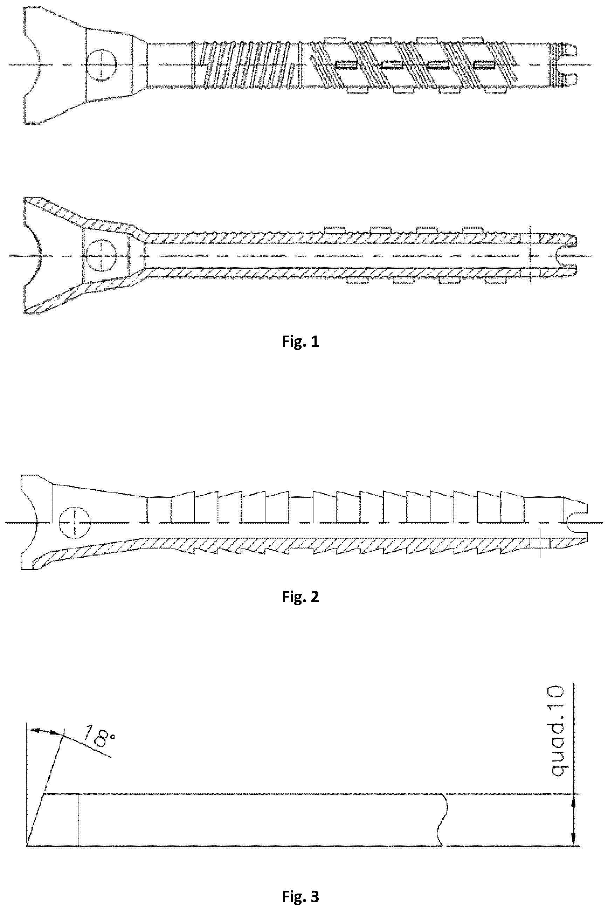

The current state of the art has already produced several techniques for connecting different layers of concrete.
One of the existing techniques for coupling different layers of concrete uses the connector shown in Figure 1. The geometry of the connector shown in Figure 1 is conditioned by mechanical constraints or specifications, namely, the cross-section of the connector is dependent on the loads and efforts to bear; on the other hand, there are practical restrictions, relating to the application of the connector in a construction site, as the tubular shape results from the need to inject resin through the component to bind it to the pre-existing concrete layer.
This connector has a cylindrical tubular central section (see cross-section in Figure 1). The outer surface is ribbed, both longitudinally and transversely. Supposedly, this ribbing ensures the anchoring of the connector to the concrete layers. The rear section is conical, with 90º angle indentations and a through hole, supposedly used to fixate structural elements. The front section also has a through hole, which will serve as an outlet for the resin that is applied through the inside of the connector, during its application at the construction site. This resin will bind this connector to an existing concrete layer.
The connector's wall thickness varies between 3 mm and 4 mm. This variation essentially results from the manufacturing process, namely casting, and not from functional specifications or requirements.
These facts illustrate the technical problem to be solved by this disclosure.

**General description**

This solution concerns an anchoring connector used for interconnecting concrete layers with a concrete-to-concrete connection; with the use of the anchoring connector and with a method for the manufacturing of the anchoring connector.
The solution disclosed herein particularly concerns an anchoring connector used to interconnect concrete layers with a concrete-to-concrete coupling with the adequate conditions, in terms of elasticity and strength, to the method used to manufacture the said screw and its use in medium-sized structures, such as buildings or houses.
In the context of this solution, the terms 'anchoring connector', 'connector' and 'specimen' are used interchangeably.
This disclosure is intended to address the problem of how an anchoring connector can bind or connect concrete layers of different pourings in structures, e.g. small-sized structures such as houses, buildings, rehabilitation of building structures or façades without damaging the existing structure and in a way that increases flexural strength and elasticity.
Such solutions involve the use of metal couplings, used to ensure the solidification of the different concrete layers. Other solutions already exist in the market that address this problem, so it is important that the alternative solution presented brings commercial advantages.
This disclosure concerns an anchoring connector for interconnecting two solid bodies, which comprises a tubular body with a front section that is inserted into the first solid body and a rear section that attaches to the second solid body, and a plurality of anchoring elements to attach the connector to the two solid bodies, these anchoring elements are distributed throughout the entire tubular body.
The anchoring elements that are distributed throughout the front section of the tubular body have an anchoring direction opposite to the connector's front-rear movement and the anchoring elements distributed throughout the rear section of the tubular body have an anchoring direction opposite to the connector's rear-front movement.
The anchoring direction is defined by the connector movement to be avoided. The connector's rear-front movement allows for the introduction of the connector into the first solid body. The anchoring direction contrary to the front-rear movement allows for its firm anchoring in the final position, in the first solid body. Thus, the removal of the anchoring connector from the first solid body is not possible, due to the presence of the anchoring elements distributed throughout the front section of the tubular body. Typically, the second solid body is formed around the rear section of the connector. The removal of the anchoring connector from the second solid body is not possible, due to the presence of the anchoring elements distributed throughout the rear section of the tubular body, whose anchoring direction is opposite to the connector's rear-front movement, which allows for its firm anchoring in the final position, in the second solid body.
This disclosure is also based on a method to anchor the anchoring connector to concrete layers of different origins and also concerns the method used to manufacture the anchoring connector itself.

The anchoring connector disclosed herein can be manufactured through different methods, namely:

    turning;
    tube press-forming;
    roll-forming of sheet metal.

For the turning method, the raw material is supplied in rod or tube form. The machine rotates the bar and one, or several, cutting tools chip away at it to obtain the desired shape. The bar is provided with dimensions above the final ones and excess material is removed to obtain the final geometry. The path of the cutting tool is controlled by the machine's computerised controller, following the instructions of a program written by the operator. This technology, called Computerised Numerical Control (CNC), guarantees high precision in the workpiece's contours and dimensions, as well as high repeatability of the process. For greater productivity, the lathes described in this disclosure are equipped with automatic feeding of raw material. Any form of revolution can be executed with these machines, i.e. it is a technology that is particularly suitable for tubular cylindrical workpieces. Seamless tube is used in the case of hollow workpieces with an unfavourable internal diameter-total length ratio.

The tube press-forming method uses the raw material supplied in tube form, and, through cold press-forming, indentations or ribs are created. The equipment used for this process is similar to that used for sheet metal stamp forming. The steps required to fold the sheet metal into a tube are eliminated, which results in greater production efficiency, namely the simplification of necessary tools. On the other hand, significant section variations, particularly in diameter, can only be achieved with additional operations.

The sheet metal roll-forming method is characterised by the fact that the raw material, namely steel sheet, is fed to the press in rolls, of a predetermined width, by a feeder placed downstream. Several successive folding and cutting operations allow creating the workpiece's final shape. The workpiece's contour (flat sheet) is cut in the press using a dedicated tool. To manufacture tubular workpieces, the flat sheet is bent in successive steps until its final tubular form is achieved. This solution can be easily applied to sheet metal up to 2 mm thickness. The closure of the tube is ensured through couplings cut at the edges of the workpiece, which will be joined together. The couplings are cut in the flat sheet, prior to folding. This is a very fast process, which allows for high manufacturing speed.

The different methods described above: turning, tube press-forming and sheet metal roll-forming all have inherent advantages and disadvantages. The choice of the final process will result from the optimisation of these characteristics and their alignment with the geometrical characteristics of the option that is ultimately chosen.

Table 1. Comparison between manufacturing methods

| Technology | Advantages |
| --- | --- |
| Turning | High precision manufacturing; Freedom of shapes; Simple and cheap tooling |
| Press-forming | Low processing costs; Low material wastage. |
| Stamp forming | Low processing costs; Low material wastage. Wide choice of materials. |

Spinning is a complementary method to the main production methods described above. Spinning is used to increase the outer diameter of a cylindrical tubular element. In the case of the anchoring connector, it can be used to taper the rear section of workpieces previously processed whit other technologies.

The method of manufacturing a lathe-turned anchoring connector/specimen uses standard cutting tools (chisels), readily available from any cutting tool supplier. The proposal for a lathe-turned workpiece is shown in figure 2. As with press-formed tube workpieces, the tapered section is obtained through a second spinning operation.

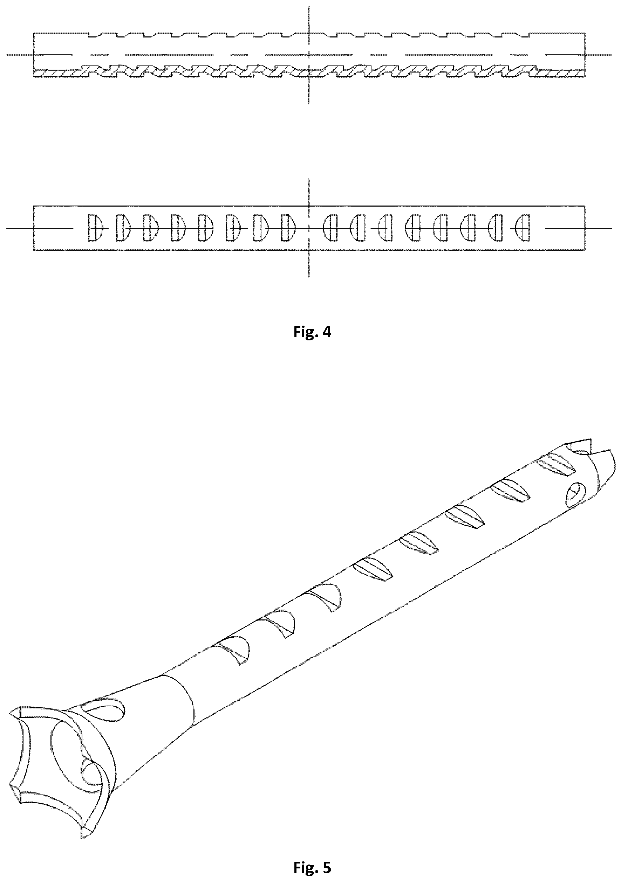

The pressing tool used to manufacture a press-formed anchoring connector/specimen, comprises a die, or stationary element, a punch, or movable element, which will shape the outside of the workpiece, and a mandrel which will ensure that the tube does not get deformed when forming the indentations. On a steel tube, the press-forming process will create indentations in the outside of the workpiece, as shown in Figures 4 and 5. The tapered section is obtained through a second spinning operation.

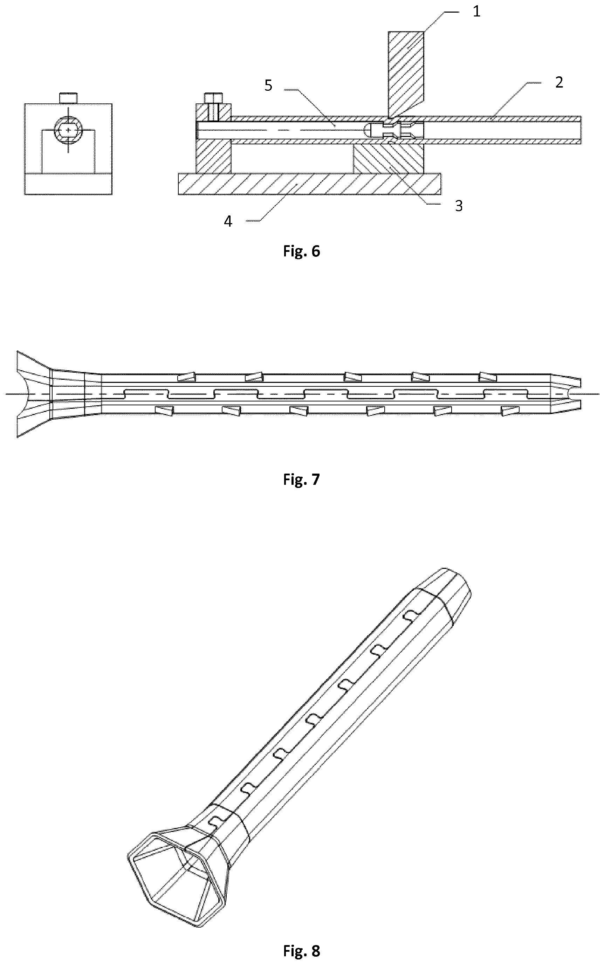

The manufacturing of a stamp-formed anchoring connector/specimen requires 3 stamping steps. In each step, the flat workpiece is given two folds. The final step, besides giving it the last two folds, also closes the specimen, to form an hexagonal section tube. The stamp-formed workpiece is shown in Figures 7 and 8. The indentations and ribs are produced in the flat workpiece and the folding creates an hexagonal cross-section component.

A serial production tool, in addition to forming the tube from sheet metal through successive folding, must also ensure the cutting of the outer contour of the flat workpiece. A stamp-forming tool is thus a tool that performs various operations, in successive steps. In the prototyping stage, it is common to split the processing operations and/or steps based on simpler individual tools and quicker construction steps.

In this case, 3 folding stages are defined, plus the flat sheet cutting step. Figure 9 represents the 1st folding step, in which the 1st stage punch forms the outer folds of the sheet against the 1st stage die. Figure 10 represents the 2nd folding step, in which the 2st stage punch forms the intermediate folds against the 2nd stage die. Figure 11 shows the 3rd folding step and also represents the closing step. In this folding and closing step, the hexagonal mandrel forms the inner folds against the lower die and the upper die closes the tube against the mandrel and against the lower die.

Throughout the document, a specific nomenclature is used to identify each of the tubes or connectors manufactured and tested. Thus, the first three characters refer to the material of the tube or connector, as follows:

TT1- Smooth E235 steel tube;
TT2 - Smooth E355 steel tube;
CT1- Lathe-turned connector;
CT2-Simple press-formed connector;
CT4-Stamp-formed connector;
HCC.B- Hilti™ control connector.

The fourth character used in the nomenclature in question refers to the type of test to which the tube or connector is subjected to, as follows:

T-tensile strength;
D - "dowel action";
AC - bond separation;
AB - separation from concrete.

The last character corresponds to the order number of the tube or connector in the test sequence. Thus, for example, the nomenclature TT1.D_3 corresponds to the third smooth E235 steel tube connector put under the *"dowel action"* test.

This disclosure concerns an anchoring connector for interconnecting two solid bodies, namely resulting from concreting, comprising, in a preferred embodiment:

a tubular body with a front part for inserting into the first solid body and a rear part for attaching the second solid body to the first solid body, and
a plurality of anchoring elements for anchoring the connector to the two solid bodies,
Wherein the anchoring elements are distributed along the entire connector's tubular body,
wherein the anchoring elements distributed on the front part of the tubular body have an anchoring contrary to the front-rear movement of the connector and,
the anchoring elements distributed along the rear part of the tubular body have an anchoring contrary to the rear-front movement of the connector.

In an embodiment, the anchoring elements may be protrusions, indentations, recesses or fins.

In an embodiment, the connector's tubular may be a lathe-turned, press-formed or stamp-formed tubular body. The connector's tubular body may also be cylindrical, hexagonal or octagonal.

In an embodiment, the connector can be a tubular body with lathe-turned anchoring elements, wherein the tubular body may be a cylindrical rack and the anchoring elements can be angled teeth of a circular profile of said cylindrical rack.

In an embodiment, the connector may be a cylindrical, tubular body with press-formed anchoring elements, which can be recesses. In this embodiment, each recess may comprise two surfaces- a front one and the other one rear-; wherein each of the surfaces of the recess forms an internal angle between the outer surface of the connector and the said recess surface, and wherein in one of the surfaces the inner angle is either right or acute and on the other surface, the internal angle is obtuse.

In an embodiment, the connector can be a tubular body and the anchoring elements can be stamp-formed, wherein the tubular body is obtainable by roll-forming a flat plate, and wherein the anchoring elements may be fins arranged along the tubular body, specifically, such fins can be arranged along the tubular body in a misaligned form among them, at the longitudinal direction of the tubular body.

In an embodiment, the connector described above may further comprise a frusto-conical rear support.

In an embodiment, the connector described above may have a thickness of 1 to 2 mm.

In an embodiment, the size of the tubular body can be 50-200 mm, preferably 110-190 mm, and even more preferably 180 mm.

In an embodiment, the connector can be of one of the materials selected from the following list: carbon steel alloy, or mixtures thereof.

In an embodiment, the connector allows interconnecting two solid bodies, wherein the solid bodies are two concrete layers from different concreting.

This disclosure also concerns the use of the connector described above for anchoring concrete layers from different concreting.

This disclosure also concerns a method for manufacturing a lathe-turned or press-formed anchoring connector for interconnecting two solid bodies, which may comprise the following steps:

placing a bar or tube on a die;
using a punch for introducing protrusions, indentations, recesses;
obtaining the connector.

A method is also disclosed for the manufacture of the lathe-turned connector described above, which can comprise a step in which a cylindrical rack is turned in the tubular body and the anchoring elements are teeth angled with the circular profile on the said cylindrical rack.

This disclosure also concerns a method for manufacturing the press-formed connector previously described, which may comprise the step of press-forming the tubular body as a cylinder and the anchoring elements as recesses.

A method is also described for manufacturing a stamp-formed connector as previously described, which may comprise the steps of creating fins one a metal sheet; successively stamp-form the said sheet to obtain a tubular body and close the said tubular body.

**Brief description of the drawings**

For an easier understanding of this disclosure, the figures representing the preferred embodiments of the solution are provided as an attachment, however, they are not intended to limit the object of this application.

**Figure 1:** Geometry of the state-of-the-art connector.

**Figure 2:** Geometry of the lathe-turned connector.

**Figure 3:** Cutting chisel for lathe-turned specimen.

**Figure 4:** Geometry of the press-formed connector.

**Figure 5:** Press-formed and spun connector.

**Figure 6:** Cross-section of pressing tool, in which:

1 represents a punch;
2 represents a connector;
3 represents a die;
4 represents a base;
5 represents a mandrel.

**Figure 7:** Geometry of the stamp-formed connector.

**Figure 8:** Stamp-formed connector.

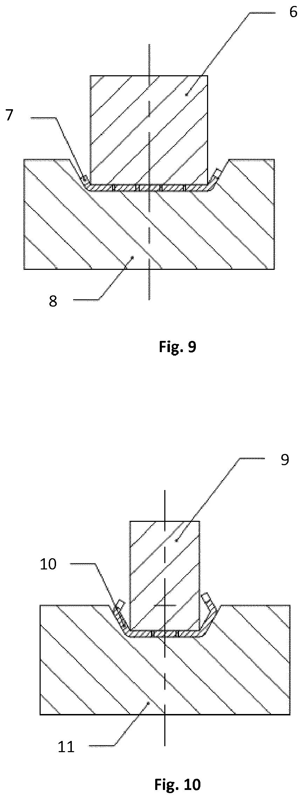

**Figure 9:** Tool cut in 1st stamp-forming stage, in which:

6 represents a 1st stage punch;

7 represents a metal sheet;
8 represents a die.

**Figure 10:** Tool cut in 2nd stamp-forming stage, in which:

9 represents a 2nd stage punch;
10 represents a partially stamp-formed sheet;
11 represents 2nd stage die.

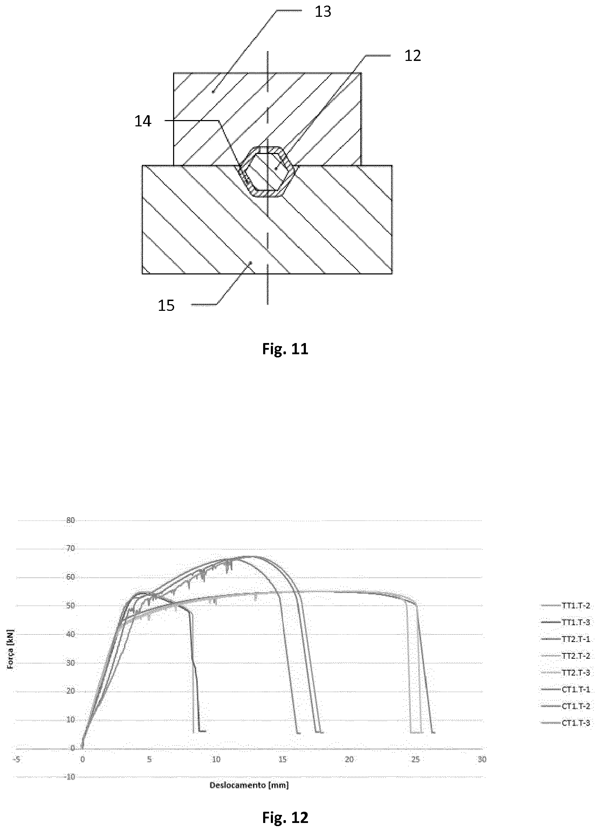

**Figure 11:** Tool cut in 3rd stamp-forming stage, in which:

12 represents an hexagonal mandrel;
13 represents a 3rd stage punch;
14 represents a closed connector;
15 represents a 3rd stage die.

**Figure 12:** Force-displacement curves of tensile tests performed.

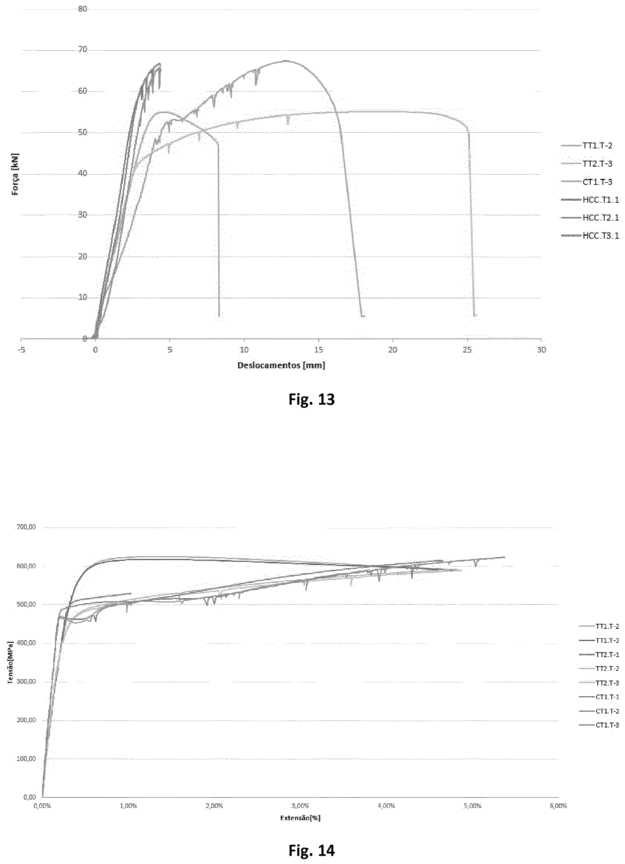

**Figure 13:** Force-displacement curves of tensile tests performed, with overlaying of results obtained with Hilti™ connectors (HCC).

**Figure 14:** Load-elongation curves of tensile tests performed.

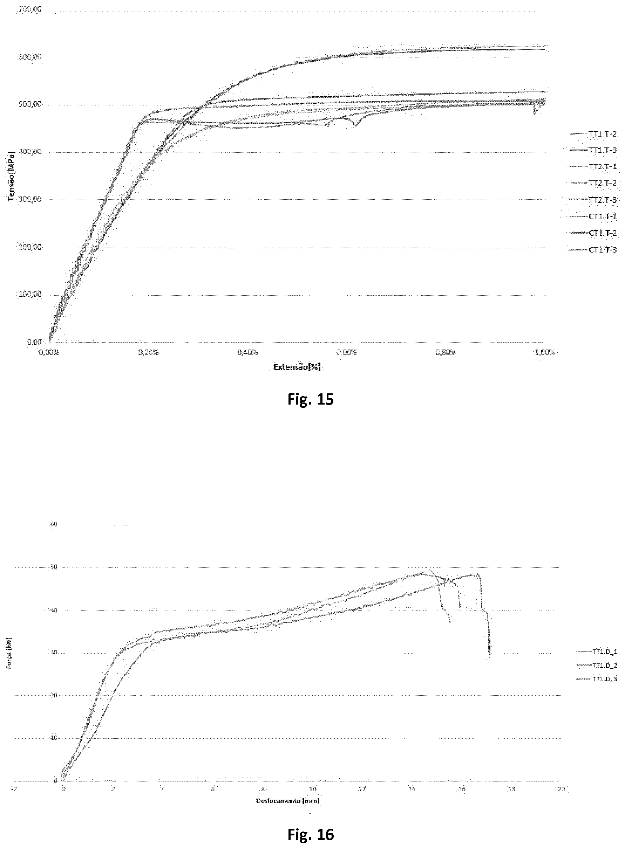

**Figure 15:** Load-elongation curves of tensile tests performed (only up to 1% elongation).

**Figure 16:** Force-displacement curve of *"dowel action"* tests performed on smooth E235 steel tube specimens (TT1.D)

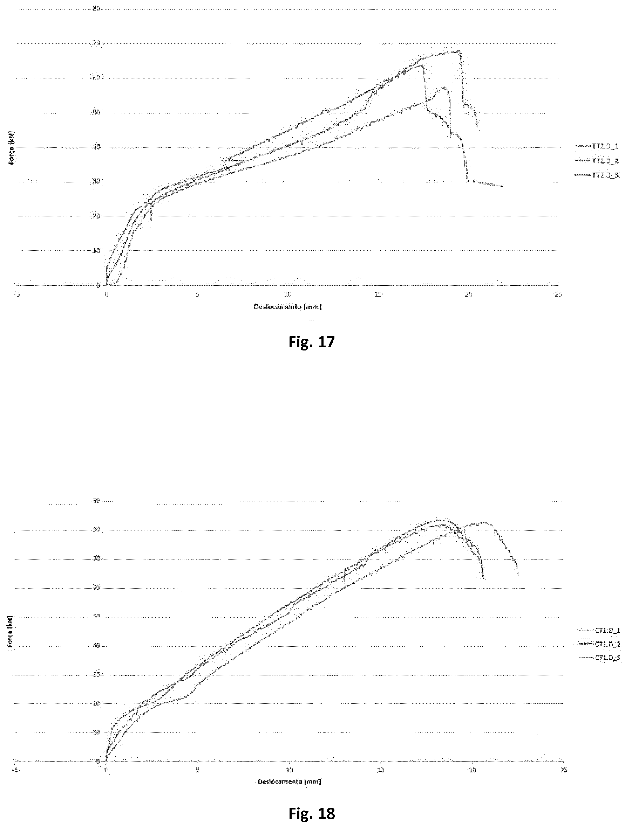

**Figure 17:** Force-displacement curve of *"dowel action"* tests performed on smooth E355 steel tube specimens (TT2.D)

**Figure 18:** Force-displacement curve of *"dowel action"* tests performed on lathe-turned connectors (CT1.D).

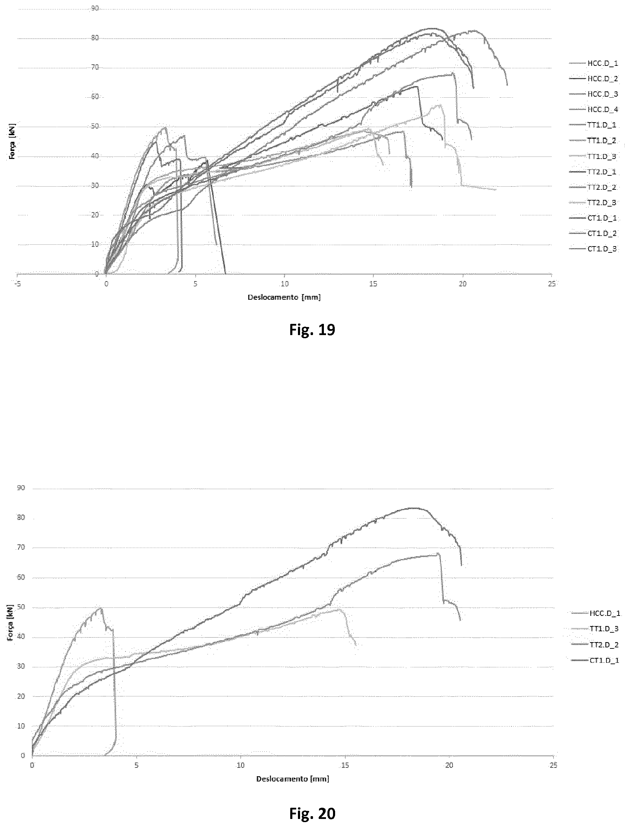

**Figure 19:** Overlaying of force-displacement curves of all *"dowel action"* tests performed.

**Figure 20:** Overlaying of force-displacement curves of the *"dowel action"* tests with the highest loads in each series.

## Detailed Description

The anchoring bolts/specimens were subjected to experimental validation tests, namely mechanical behaviour characterisation tests. Thus, the connectors were subjected to various separate tests, aimed at characterising their behaviour under tensile strength and *dowel-action.*

Tensile tests were performed on commercially available connectors, namely Hilti™ connectors and on the connectors disclosed herein. The tests on the various connectors were performed in a similar way, but clamps were used to hold the specimens on both sides and a mechanical extensometer was used for measuring elongation, as this was allowed by the space between the clamps. The load plan used was the following: a pre-load of 0.1 kN/s, up to a total of 2.25 kN, followed by a load decrease at the same rate down to 0 kN and a new load increase with displacement control at a speed 0.04 mm/s, to breaking point.

The connectors disclosed herein that were subjected to comparative tests are designated as follows:

- TT1 connectors, which are material characterisation specimens, consisting of smooth, seamed E235 steel tubes, with an outer diameter of 16 mm, inner diameter of 12 mm and a thickness of 2 mm;

- TT2 connectors, which are material characterisation specimens, consisting of smooth, seamless E355 steel tubes, with an outer diameter of 16 mm, an inner diameter of 12 mm and a thickness of 2 mm;

- CT1 connectors, which are prototypes of connectors obtained through the lathe-turning of seamless E355 steel tubes. These elements have an inner diameter of 6 mm, wall thickness varying between 3.5 mm and 5 mm and an outer diameter varying between 13 mm and 16 mm.

Based on the data collected on the displacements measured by deflectometers and on the clamping force exerted by the press, the force-displacement diagrams shown in Figure 12 were created.

Choosing only one "representative" of each series to facilitate the reading of the diagrams, considering that the different elements of each series show similar behaviours, and overlaying the results obtained for the tensile tests performed on the Hilti™ HCC-B connector on this graph, we obtain the diagram shown on figure 13. Hilti™'s HCC-B connectors have the lowest deformation capability of all the elements tested. In terms of maximum resistive load, CT1 specimens came close to the values achieved by HCC specimens, as the values recorded by specimens TT1 and TT2 were approximately 83% of the values recorded by Hilti™'s HCC-Bs.

It should be noted that the displacements considered here are the displacements measured by LVDTs, and, for this reason, they may include not only the deformation of the specimens, but also some adjustments to the workpieces and contribution of vertical displacement resulting from some amount of crushing of the specimens by the clamps.

In addition to the diagrams shown above, load-elongation curves were also drawn up, based on the force exerted by the press, the cross-sectional area of the specimen and the values measured by the mechanical extensometer.

Cross-sectional areas were calculated, considering, for TT1.T and TT2.T specimens, an outer diameter of 16 mm and an inner diameter of 12 mm, which correspond to an area of 87.96 mm$^2$, and, for CT1.T specimens, an outer diameter of 13 mm and an inner diameter of 6 mm, which corresponds to an area of 104.46 mm$^2$. In the case of CT1.T connectors, the cross-sectional area is not constant throughout the specimen, given the indentation that exists along its longitudinal development, and, for this reason, the smallest cross-sectional area was considered for load calculation. Loads ($\sigma$) were obtained using the formula $\sigma = F/A,$ in which F is the force exerted by the press and A is the cross-sectional area.

Elongation ($\varepsilon$) was calculated using the formula $\varepsilon = Displacement/Original\ Length$, in which Displacement is the value recorded by the mechanical extensometer and Original Length is 48 mm, as this is the distance between the blades of the mechanical extensometer. It should be noted that there are no readings of these values until the end of the test, as the mechanical extensometer was removed when it recorded values near 2.25 mm, given that its travel is 2.5 mm. In any case, the mechanical extensometer could not be used until the end of the test, as if it were kept on the specimen at the time of rupture, it might be damaged.

The load-elongation curves obtained according to the preceding descriptions are represented in figure 14.

On figure 14, CT1.T specimens have a higher elasticity module than the rest, as in the respective load-elongation curve, the elastic zone is steeper. However, this probably has to do with the fact that we have considered the most unfavourable cross-sectional area for calculating loads. If an average cross-section area is used, taking into account the ribs (considering an outer diameter of about 14.1 mm) we obtain a slope in that part of the graph that is very similar to the others. Therefore, we can say that the elasticity modules of all specimens tested are around 210 GPa - 225 GPa.

All three *dowel-action* tests performed on TT1.D specimens were very similar, with a progressive increase in deformation, up to breaking point. The maximum load values obtained for each of the specimens were 48.118 kN, 48.412 kN and 49.392 kN to which correspond vertical displacements of the central box by 16.37 mm, 14.385 mm and 14.685 mm, respectively. Figure 16 shows the force-displacement curve of tests performed on TT1.D specimens.

The tests of TT2.D specimens were very similar to those of TT1.D specimens, so no aspects in particular are worth mentioning. The maximum load values obtained for each of the specimens were 63.602 kN, 68.306 kN and 57.330 kN to which correspond vertical displacements of the central box by 17.33 mm, 19.43 mm and 18.65 mm, respectively.

Tests conducted on CT1.D specimens were similar to those already performed, however, it was found that they can withstand considerably higher loads than those recorded in previous tests. The maximum load values obtained for each of the specimens were 83.398 kN, 81.732 kN and 82.614 kN to which correspond vertical displacements of the central box by 18.13 mm, 18.33 mm and 20.66 mm, respectively.

A comparative analysis of the force-displacement curves of each series of tests presented above shows that there is no performance dispersion in each of the series of tests performed on the specimens executed according to this solution, and that behaviours in the various tests of each series were very similar. The same cannot be said, however, of tests conducted on specimens executed with Hilti™ connectors, as the results show a significant amount of dispersion. This is most likely due to the fact that the manufacturing process of HCC-B connectors - casting - does not ensure homogeneity between each of the elements, as is the case with the processes used to manufacture the prototypes of this solution.

Figure 19 shows an overlaying of the force-displacement curves of all the tests performed. Figure 20 shows an overlaying of the force-displacement curves of all the tests performed. The selection criterion was selecting the element that withstood the greater load within each series, the choice having thus fallen on HCC.D_1 TT1.D_3, TT2.D_2 and CT1.D_1 elements.

The analysis of figures 19 and 20 shows that the vertical displacement of the central box verified during the testing of HCC.D specimens, at the breaking point, is much lower than that found in other tests. By quantifying this difference, we can say that the displacement at the breaking point of TT1.D specimens is about three times higher than that found in the tests of HCC.D specimens, whereas in the case of tests conducted on TT2.D and CT1.D specimens, this shift is about four times higher than that of HCC.D specimens. In short:

$$d_{TT1.D} \approx 3x \, d_{HCC.D} \quad d_{TT2.D} \approx 4x \, d_{HCC.D} \quad d_{CT1.D} \approx 4x \, d_{HCC.D}$$

It can also be concluded that, in relation to the maximum load value reached during testing, TT1.D specimens show slightly higher, although very close values to those obtained in HCC.D specimen tests, whereas the maximum load values of TT2.D specimens are about 34% higher and those of CT1.D specimens are about 74% higher. In short:

$$F^{ult.}_{TT1.D} \approx 1x \, F^{ult.}_{HCC.D}$$

$$F^{ult.}_{TT2.D} \approx 1.34x \, F^{ult.}_{HCC.D}$$

$$F^{ult.}_{CT1.D} \approx 1.74x \, F^{ult.}_{HCC.D}$$

However, it should be pointed out that, for low displacement values, the HCC.D specimens presented the best behaviour of all, as they are able to withstand higher loads. The major handicap of these elements is that they break with relatively small displacements and in a sudden manner, showing no sign of plasticity.

The vertical displacement of the central box verified in the tests conducted on HCC.D specimens at breaking point is much lower than that found in other tests. By quantifying this difference, we can say that the displacement at the breaking point of TT1.D specimens is about three times higher than that found in the tests of HCC.D specimens, whereas in the case of tests conducted on TT2.D and CT1.D specimens, this displacement is about four times higher than that of HCC.D specimens. In short:

$$d_{TT1.D} \approx 3x \, d_{HCC.D} \quad d_{TT2.D} \approx 4x \, d_{HCC.D} \quad d_{CT1.D} \approx 4x \, d_{HCC.D}$$

It can also be concluded that, in relation to the maximum load value reached during testing, TT1.D specimens show slightly higher, although very close values to those obtained in HCC.D specimen tests, whereas the maximum load values of TT2.D specimens are about 34% higher and those of CT1.D specimens are about 74% higher. In short:

$$F^{ult.}_{TT1.D} \approx 1x \, F^{ult.}_{HCC.D}$$

$$F^{ult.}_{TT2.D} \approx 1.34x \, F^{ult.}_{HCC.D}$$

$$F^{ult.}_{CT1.D} \approx 1.74x \, F^{ult.}_{HCC.D}$$

However, it should be pointed out that, for low displacement values, the HCC.D specimens presented the best behaviour of all, as they are able to withstand higher loads. The major handicap of these elements is that they break with relatively small displacements and in a sudden manner, showing no sign of plasticity.

Throughout the description and claims, the word "comprise" and its variations are not intended to exclude other technical characteristics, such as other components or steps. Additional objects, advantages and features of the disclosure shall become apparent for technical experts in the field upon examination of the description or may be learned through the disclosure. The following examples and figures are provided for illustrative purposes and are not intended to limit this disclosure in any way. Furthermore, this disclosure covers all possible combinations of the preferred or specific embodiments described herein.

Although this description only refers to and describes specific embodiments, a technical expert in the field would be able to introduce modifications and replace certain technical features by others of equal relevance, depending on the requirements of each situation, while remaining within the scope of protection defined by the attached claims.

The above embodiments can be combined with each other. The following claims further define preferred embodiments.

## Claims

1. Anchoring connector for interconnecting two solid bodies resulting from concreting, comprising:

   a tubular body with a front part for inserting into the first solid body and a rear part for attaching the second solid body to the first solid body, and
   a plurality of anchoring elements for anchoring the connector to the two solid bodies,
   wherein the anchoring elements are distributed along the entire tubular body of the connector,
   wherein the anchoring elements distributed on the front part of the tubular body have an anchoring contrary to the front-rear movement of the connector and,
   the anchoring elements distributed along the rear part of the tubular body have an anchoring contrary to the rear-front movement of the connector.

2. Connector according to the previous claim wherein the anchoring elements are protrusions, indentations, recesses or fins.

3. Connector according to any one of the previous claims wherein the tubular body is a lathe-turned, press-formed or stamp-formed tubular body.

4. Connector according to the previous claims, wherein the anchoring elements are lathe-turned, press-formed or stamp-formed anchoring elements on the tubular body.

5. Connector according to any of the previous claims wherein the tubular body is cylindrical, hexagonal or octagonal.

6. Connector according to any of the previous claims wherein the tubular body and the anchoring elements are lathe-turned, the tubular body is a cylindrical rack and the anchoring elements are angled teeth of a circular profile of said cylindrical rack.

7. Connector according to any of claims 1-5 wherein the tubular body and the anchoring elements are press-formed, the tubular body is cylindrical and the anchoring elements are recesses; wherein each recess comprises two surfaces, a front and the other a rear surface.

8. Connector according to the previous claim, wherein each of the surfaces of the recess forms an internal angle between the outer surface of the connector and said recess surface, and wherein in one of the surfaces, the inner angle is either right or acute, and on the other surface, the internal angle is obtuse.

9. Connector according to any of the previous claims wherein the tubular body and the anchoring elements are stamp-formed, wherein the tubular body is an obtainable body by roll-forming a flat plate, and wherein the anchoring elements are fins arranged along the tubular body.

10. Connector according to the previous claim wherein the fins are arranged along the tubular body in a misaligned form among them at the longitudinal direction of the tubular body.

11. Connector according to any of the previous claims comprising a frusto-conical rear support.

12. Connector according to any of the previous claims comprising a thickness of 1 to 2 mm.

13. Connector according to any of the previous claims wherein the size of the tubular body is 50-200 mm; preferably 110-190 mm, even more preferably 180 mm.

14. Connector according to any of the previous claims wherein the connector is of a material selected from the following list: carbon steel alloy, or mixtures thereof.

15. Connector according to any of the previous claims wherein the two solid bodies are concrete layers from different concreting.

16. Method for manufacturing a lathe-turned or press-formed anchoring connector for interconnecting two solid bodies comprising the following steps: placing a bar or tube on a die;
using a punch for introducing protrusions, indentations, recesses; obtaining the connector.

**Fig. 1**

**Fig. 2**

18°

quad.10

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

**Fig. 18**

**Fig. 19**

**Fig. 20**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/244244 A1 (AYRLE THOMAS [DE]) 3 November 2005 (2005-11-03) * paragraph [0012] - paragraph [0039]; figures 1-4 * ----- | 1-16 | INV. E04B1/48 ADD. E04C2/04 F16B13/00 |
| X | EP 1 227 196 A1 (HILTI AG [LI]) 31 July 2002 (2002-07-31) * abstract; figures 1, 2 * ----- | 1-16 | |

TECHNICAL FIELDS
SEARCHED        (IPC)

E04C
E04B
B28B
F16B

The present search report has been drawn up for all claims

| Place of search | Date of completion of the search | Examiner |
|---|---|---|
| The Hague | 25 January 2017 | Couprie, Brice |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

..............................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 17 7024

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2017

| Patent document cited in search report | Publication date | Patent family member(s) | Publication date |
|---|---|---|---|
| US 2005244244 A1 | 03-11-2005 | AT 502168 T<br>DE 102004020852 A1<br>EP 1591596 A2<br>US 2005244244 A1 | 15-04-2011<br>17-11-2005<br>02-11-2005<br>03-11-2005 |
| EP 1227196 A1 | 31-07-2002 | DE 10103231 A1<br>EP 1227196 A1<br>JP 2002242314 A<br>US 2002098055 A1 | 01-08-2002<br>31-07-2002<br>28-08-2002<br>25-07-2002 |

EPO FORM P0459

For more details about this annex : see Official Journal of the European Patent Office, No. 12/82